# EUROPÄISCHE PATENTANMELDUNG

(11) **EP 2 090 521 A1**
(43) Veröffentlichungstag der Anmeldung: **19.08.2009**
(21) Anmeldenummer: 09000939.0
(22) Anmeldetag: 23.01.2009
(51) Int. Cl.: B65D 19/38, B62B 3/00

(54) **Ladungsträger, insbesondere Palette**

(30) Priorität: 14.02.2008 DE 202008002108 U
(71) Anmelder: Pilsl Transportgeräte GmbH, 94107 Untergriesbach (DE)
(72) Erfinder: Pilsl, Christian, 94110 Wegscheid (DE)
(74) Vertreter: Grünberg, Thomas

(57) **Zusammenfassung**

Die Erfindung betrifft einen Ladungsträger (100, 111), insbesondere eine Palette zum Abstellen, Transportieren und/oder Lagern von Waren, **dadurch gekennzeichnet, dass** mindestens ein Datenträger (11) geschützt im Ladungsträger integriert ist, wobei der Datenträger auf einem Trägerelement (10) angeordnet ist, welches mit dem Ladungsträger lösbar verbindbar ist.

## Beschreibung

Die vorliegende Erfindung betrifft einen Ladungsträger, insbesondere Palette zum Abstellen, Transportieren und/oder Lagern von Waren.
Es ist weit verbreitet, Ladungsträger (z.B. Paletten) mit verschlüsselten Informationen zu versehen, indem auf den Ladungsträger beispielsweise ein Barcode aufgebracht wird. Derartige Barcodes können eindimensional als Streifenmuster oder zweidimensional ausgebildet sein. Sie werden in der Regel mit einer Leseeinrichtung gelesen.
Derartige Barcodes werden in immer größeren Bereichen durch RFID-Transponder ersetzt. Hierbei handelt es sich um kleine Chips, die auch ohne eigene Stromversorgung in einem meist niederfrequenten Feld eine Kennung aussenden, um Gegenstände zu identifizieren. "RFID" steht für "Radio Frequenzy Identification" und ermöglicht die berührungslose Datenerfassung. Die von den RFID-Transpondern ausgesendeten Signale werden von einem Lesegerät gelesen. Zur Datenübertragung werden magnetische oder elektromagnetische Felder eingesetzt.

Ein Nachteil der Ladungsträger aus dem Stand der Technik, welche Datenträger aufweisen, besteht darin, dass die Datenträger an den Ladungsträgern leicht beschädigt werden können. Ein weiterer Nachteil besteht darin, dass bei einer Beschädigung oder Zerstörung eines einen Datenträger aufweisenden Ladungsträgers auch der Datenträger unbrauchbar wird.

Der vorliegenden Erfindung liegt die Aufgabe zugrunde, einen Ladungsträger zur Verfügung zu stellen, welcher die Nachteile des Standes der Technik überwindet.

Diese Aufgabe wird durch einen Ladungsträger, insbesondere Palette zum Abstellen, Transportieren und/oder Lagern von Waren gelöst, welcher dadurch gekennzeichnet ist, dass mindestens ein Datenträger geschützt im Ladungsträger integriert ist, wobei der Datenträger auf einem Trägerelement angeordnet ist, welches mit dem Ladungsträger lösbar verbindbar ist.
Durch die geschützte Anordnung des Datenträgers im Ladungsträger wird dieser vor Beschädigung (beispielsweise durch Schlag- oder Stoßwirkung) geschützt. Durch die Tatsache, dass der Datenträger auf einem Trägerelement angeordnet ist, welches mit dem Ladungsträger lösbar verbindbar ist, ist es möglich, bei einer Beschädigung des Ladungsträgers den Datenträger auf dem Trägerelement in einfacher Art und Weise auszuwechseln. Der Datenträger kann dann unmittelbar in einen neuen, unbeschädigten Ladungsträger integriert werden.
In der Regel handelt es sich bei dem Datenträger des erfindungsgemäßen Ladungsträgers um einen eingangs genannten RFID-Transponder.

In der Regel ist der Ladungsträger nicht massiv, sondern verrippt bzw. zerklüftet ausgebildet, was zu einer Reduzierung des Gewichts beiträgt.
Durch die Verrippungen entsteht eine Vielzahl von Kammern. Vorzugsweise weist der erfindungsgemäße Ladungsträger mindestens eine Kammer zur Aufnahme des Trägerelements auf, wobei die Form des Trägerelements vorzugsweise an die Form dieser Kammer angepasst ist. Durch die Anpassung der Form des Trägerelements an die Form der für dieses vorgesehenen Kammer wird beispielsweise erreicht, dass das Trägerelement mit gutem Sitz in diese Kammer integriert werden kann. Die Abmessung und die Form dieser Kammer kann derart mit den Abmessungen und der Form des Trägerelements abgestimmt sein, dass ein Klemmsitz des Trägerelements in dieser Kammer erreicht wird.

Bei einer bevorzugten Ausführungsform des erfindungsgemäßen Ladungsträgers ist das Trägerelement mit dem Datenträger in der Nähe einer Rolle des Ladungsträgers angeordnet und wird durch die Rolle im Ladungsträger gehalten. Dadurch wird ein sicherer Sitz des Trägerelements im Ladungsträger erreicht.
Mit Vorteil weist der erfindungsgemäße Ladungsträger zwei Datenträger auf, welche schräg zueinander angeordnet sind. Dadurch wird erreicht, dass zumindestens einer der Datenträger von einem Lesegerät gelesen werden kann. Befindet sich ein Datenträger nämlich in einem rechten Winkel zu den elektromagnetischen Strahlen eines Lesegerätes, so können die ausgesendeten Signale des Datenträgers vom Lesegerät nicht gelesen werden. Durch die Anordnung von mindestens zwei Datenträgern, welche schräg zueinander angeordnet sind, wird erreicht, dass mindestens einer der Datenträger sich nicht in einer senkrechten Stellung zu den Strahlen des Lesegerätes befindet.

Vorzugsweise weist das Trägerelement des erfindungsgemäßen Ladungsträgers einen, vorzugsweise auswechselbaren Signalknopf auf, der vorzugsweise in eine Aussparung des Ladungsträgers einpassbar ist. Durch diesen Signalkopf wird einer Bedienperson beispielsweise angezeigt, ob der Ladungsträger bereits mit einem Datenträger versehen ist. Je nach Art des Datenträgers kann der auswechselbare Signalknopf gegen einen anderen Signalknopf (beispielsweise mit einer anderen Farbe) ausgewechselt werden.

Die vorliegende Erfindung betrifft ferner ein Trägerelement zum Tragen eines Datenträgers, vorzugsweise eines RFID-Transponders, wobei das Trägerelement mit dem Datenträger in einen Ladungsträger, insbesondere in eine Palette integrierbar ist.

Vorzugsweise ist das erfindungsgemäße Trägerelement an die Profilform eines Ladungsträgers angepasst. Dadurch kann es beispielsweise mit festem Sitz in einen Ladungsträger integriert werden.

Vorzugsweise ist das erfindungsgemäße Trägerelement lösbar mit einem Ladungsträger verbindbar. Diese lösbare Verbindung kann beispielsweise eine Schnappverbindung, Klemmverbindung oder eine Rastverbindung sein. Ferner kann das Trägerelement mit dem Ladungsträger verschraubt sein. Durch die lösbare Verbindbarkeit des Trägerelements mit dem Ladungsträger kann dieses in einfacher Art und Weise ausgewechselt werden.

In der Regel ist das erfindungsgemäße Trägerelement aus einem insbesondere thermoplastischen Kunststoff, vorzugsweise im Spritzgussverfahren gefertigt.
Ferner kann das erfindungsgemäße Trägerelement einen, vorzugsweise auswechselbaren Signalknopf aufweisen. Dieser Signalknopf zeigt einem Anwender an, ob ein Datenträger in einen Ladungsträger integriert ist.
Vorzugsweise ist das erfindungsgemäße Trägerelement als geripptes Profil ausgebildet. Die gerippte Ausbildung des Trägerelements führt zu einer stabilen Leichtbauweise.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

### In den Zeichnungen zeigen:

- Figur 1:: Perspektivische Frontansicht eines erfindungsgemäßen Trägerelements;
- Figur 2:: Perspektivische Rückseitenansicht des Trägerelements von Figur 1;
- Figur 3:: Perspektivische Darstellung einer erfindungsgemäßen Palette;
- Figur 4:: Perspektivische Darstellung der Palette von Figur 3 (Unterseite);
- Figur 5:: Detaildarstellung der Palette von Figur 3 im Bereich einer Rolle;
- Figur 6:: Detaildarstellung der Palette von Figur 3 (mit abgenommener Rolle);
- Figur 7:: Draufsicht auf eine Rolle der Palette von Figur 3.

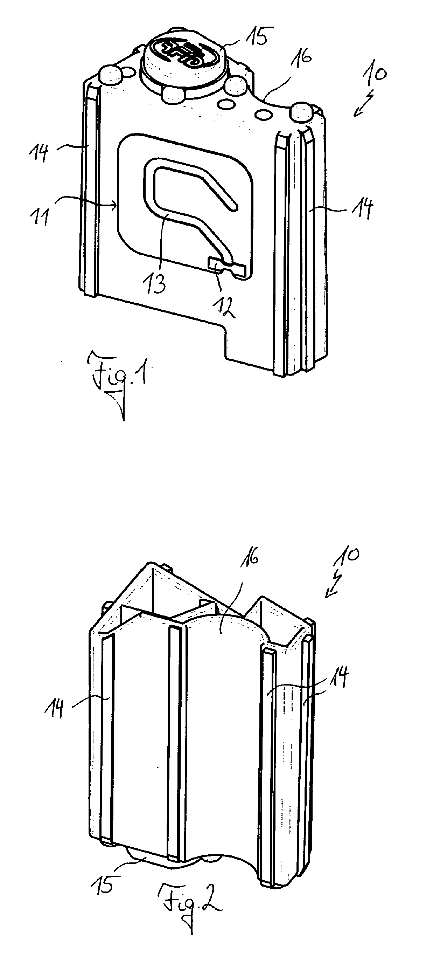

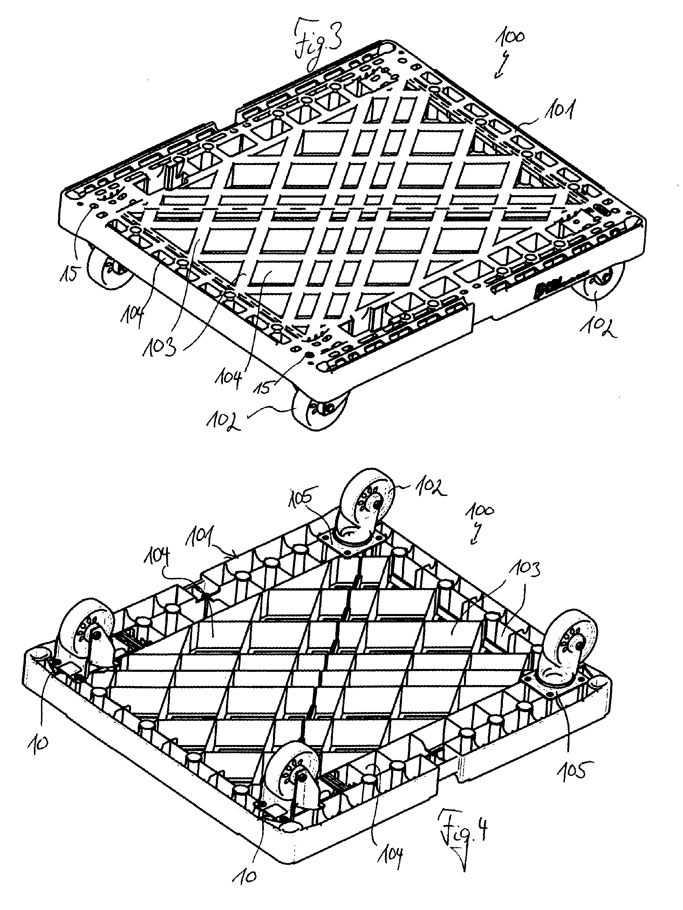

Figur 1 zeigt ein erfindungsgemäßes Trägerelement 10 mit einem RFID-Transponder 11. Der Transponder 11 umfasst einen Chip 12 und eine Antenne 13 und ist am Trägerelement angeklebt. Das Trägerelement 10 ist als Kunststoffprofil ausgebildet und weist mehrere Rippen 14 sowie eine runde Einbuchtung 16 auf. Die Form des Trägerelements 10 mit den Rippen 14 und der Einbuchtung 16 ist an die Form einer Aufnahmekammer einer Palette angepasst (siehe Figuren 3 bis 7). Das Trägerelement 10 weist ferner einen auswechselbaren Knopf 15 auf. Dieser auswechselbare Knopf 15 dient in erster Linie dazu, einer Bedienperson anzuzeigen, ob eine bestimmte Palette mit einem Trägerelement 10 versehen ist. Der Knopf 15 ist in der Regel in eine Aussparung einer Palette, welche mit einem Transponder bestückt werden soll, einpassbar.

In Figur 2 ist gut die Einbuchtung 16 zu erkennen. Ferner sind weitere Rippen 14 zu sehen, welche einer guten Einpassbarkeit und einem guten Sitz des Trägerelements 10 in einer Palette dienen.

Figur 3 zeigt eine perspektivische Darstellung einer erfindungsgemäßen Palette 100 mit einem rechteckigen Korpus 101, an dessen vier Ecken jeweils eine Laufrolle 102 angeordnet ist. Der Korpus 101 der Palette 100 ist in Leichtbauweise gefertigt. Der Korpus 101 ist nicht massiv, sondern zerklüftet ausgebildet und zeigt eine Vielzahl von Verstrebungen 103, die wiederum eine Vielzahl von Kammern 104 bilden.
In den Korpus 101 der Palette 100 sind zwei Trägerelemente 10 aus den Figuren 1 und 2 integriert. Von diesen Trägerelementen sind in der vorliegenden Darstellung nur die Knöpfe 15 zu erkennen, die in eine Aussparung des Korpus 101 der Palette 100 eingepasst sind.

Figur 4 zeigt die Unterseite der Palette 100 aus Figur 3. In dieser Darstellung sind die beiden Trägerelemente 10 teilweise zu erkennen, welche unterhalb der Basisplatten 105 der Laufrollen 102 angeordnet sind und durch diese Basisplatten im Korpus 101 der Palette 100 gehalten werden.

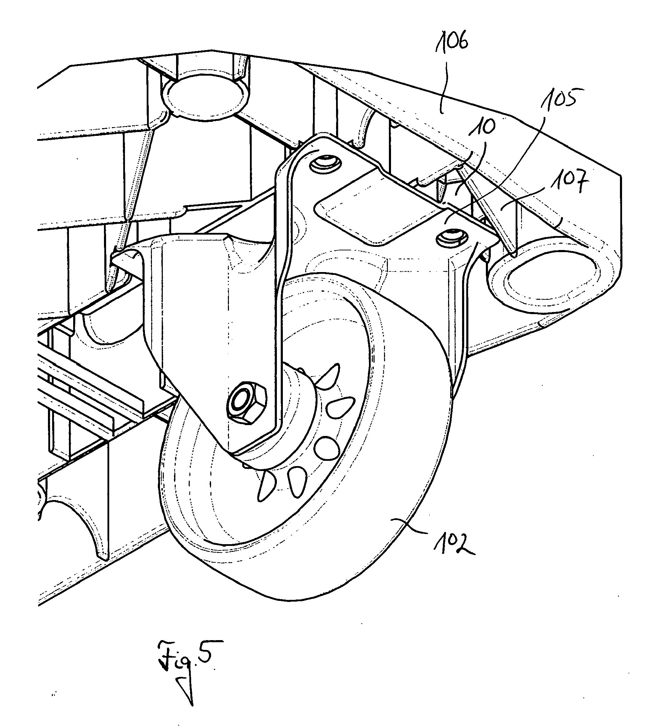

Figur 5 zeigt einen vergrößerten Ausschnitt aus der Palette 100 im Bereich einer Laufrolle 102, wobei durch die Basisplatte 105 der Laufrolle 102 das Trägerelement 10 im Korpus 101 der Palette 100 gehalten wird.

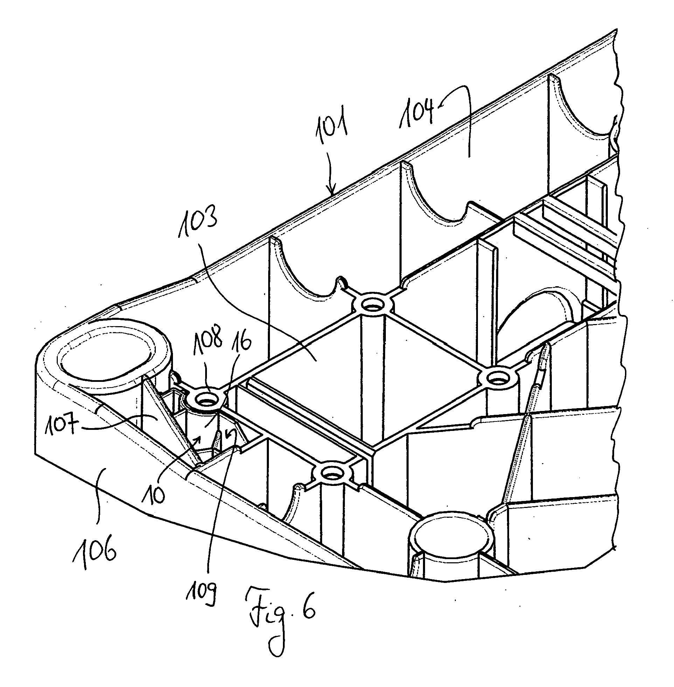

Figur 6 zeigt den vergrößerten Ausschnitt aus der Palette 100 (siehe Figur 5), wobei in dieser Darstellung die Laufrolle 102 abgenommen ist. In dieser Darstellung ist das Trägerelement 10, welches in den Korpus 101 integriert ist, gut zu erkennen. Das Trägerelement 10 liegt mit der Seite, welche den Transponder 11 (hier nicht zu erkennen) trägt, an einer zum Korpusrand 106 schräg angeordneten Fläche 107 an. Eine derartige schräge Fläche befindet sich auch an der benachbarten Korpusecke, an welcher ebenfalls ein Trägerelement an einer derartigen schrägen Fläche angeordnet ist (hier nicht zu sehen). Dadurch kann ein Lesegerät in jeder beliebigen Stellung der Palette die Signale des Transponders 11 des Trägerelements 10 lesen. Es können niemals beide Transponderchips senkrecht zu einem Lesegerät (z.B. Gate) stehen. Wie bereits oben beschrieben, können Transponder in einer senkrechten Stellung zu einem Lesegerät nicht gelesen werden.
Das Trägerelement 10 ist an die Profilform des Korpus angepasst. So passt sich beispielsweise die Einbuchtung 16 des Trägerelements 10 an einen im Korpus 101 befindlichen Schraubkanal 108 an, welcher der Befestigung der Basisplatte 105 der Laufrollen 102 dient. Der Schraubkanal 108 sowie die schräge Fläche 107 sind Bestandteile einer Kammer 109, welche das Trägerelement 10 aufnimmt. In dieser Kammer 109 ist das Trägerelement 10 im wesentlichen passgenau integriert.
Zum Auswechseln des Trägerelements 10 (beispielsweise bei Defekt des Transponders) wird zunächst die Laufrolle 102 mit der Basisplatte 105 vom Korpus 101 abmontiert (wie in der vorliegenden Darstellung gezeigt). Anschließend kann das Trägerelement 10 in einfacher Art und Weise aus der Kammer 109 entnommen werden und durch ein neues Trägerelement mit darauf aufgeklebtem Transponder ersetzt werden.

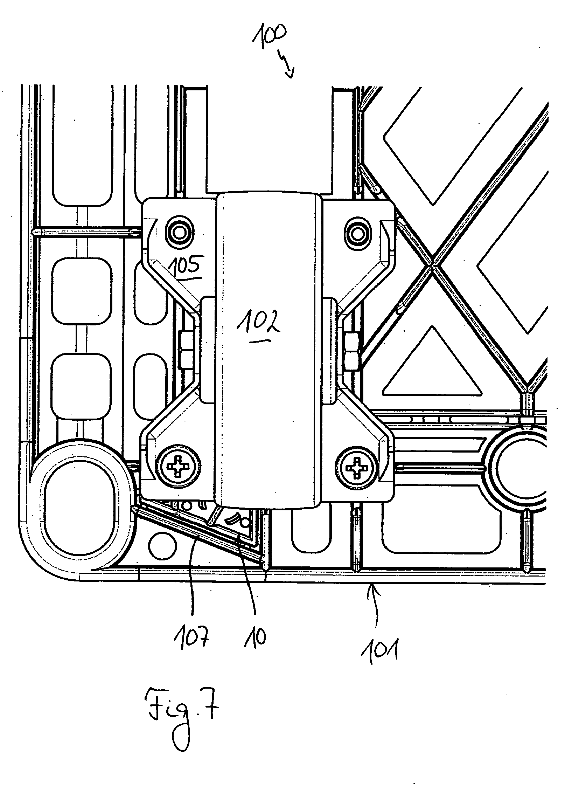

Figur 7 zeigt eine Draufsicht auf die Laufrolle 102. In dieser Darstellung ist die schräge Fläche 107 sowie ein Teil des Trägerelements 10 zu erkennen. Das Trägerelement 10 wird durch die Basisplatte 105 in der Kammer 109 des Korpus 101 der Palette 100 gehalten.

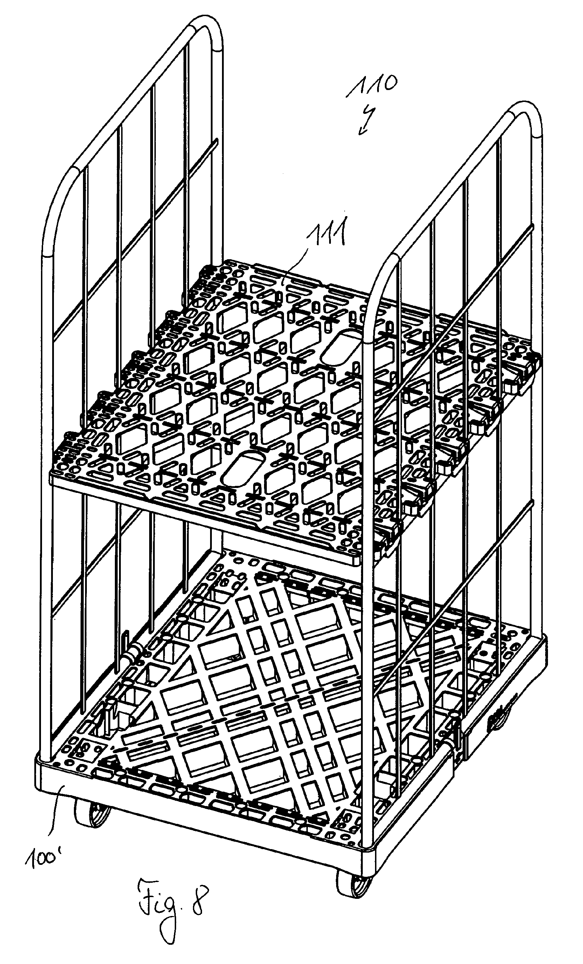

Figur 8 zeigt einen Rollbehälter 110 mit einer Palette 100' und einem Zwischenboden 111. In diesem Fall ist das Trägerelement 10 nicht in der eigentlichen Palette 100', sondern im Zwischenboden 111 integriert. Auch ein derartiger Zwischenboden soll als erfindungsgemäßer Ladungsträger verstanden werden.
Der Zwischenboden ist ähnlich gekämmert ausgebildet wie die oben beschriebene Palette 100 und weist ebenfalls eine Aufnahmekammer (hier nicht zu sehen) für ein Trägerelement 10 auf.

## Patentansprüche

1. Ladungsträger (100, 111), insbesondere Palette zum Abstellen, Transportieren und/oder Lagern von Waren, **dadurch gekennzeichnet, dass** mindestens ein Datenträger (11) geschützt im Ladungsträger integriert ist, wobei der Datenträger auf einem Trägerelement (10) angeordnet ist, welches mit dem Ladungsträger lösbar verbindbar ist.

2. Ladungsträger (100, 111) nach Anspruch 1, **dadurch gekennzeichnet, dass** es sich bei dem Datenträger (11) um einen RFID-Transponder handelt.

3. Ladungsträger (100, 111) nach einem der Ansprüche 1 oder 2, **dadurch gekennzeichnet, dass** er mindestens eine Kammer (109) zur Aufnahme des Trägerelements (10) aufweist, wobei die Form des Trägerelements vorzugsweise an die Form dieser Kammer angepasst ist.

4. Ladungsträger (100, 111) nach einem der vorhergehenden Ansprüche, **dadurch gekennzeichnet, dass** das Trägerelement (10) mit dem Datenträger (11) in der Nähe einer Rolle (102) des Ladungsträgers angeordnet ist und durch die Rolle im Ladungsträger gehalten wird.

5. Ladungsträger (100, 111) nach einem der vorhergehenden Ansprüche, **dadurch gekennzeichnet, dass** er zwei Datenträger (11) aufweist, welche schräg zueinander angeordnet sind.

6. Ladungsträger (100, 111) nach einem der vorhergehenden Ansprüche, **dadurch gekennzeichnet, dass** das Trägerelement (10) einen, vorzugsweise auswechselbaren Signalknopf (15) aufweist, der vorzugsweise in eine Aussparung des Ladungsträgers einpassbar ist.

7. Trägerelement (10) zum Tragen eines Datenträgers, vorzugsweise eines RFID-Transponders (11), wobei das Trägerelement mit dem Datenträger in einen Ladungsträger (100, 111), insbesondere in eine Palette integrierbar ist.

8. Trägerelement (10) nach Anspruch 7, **dadurch gekennzeichnet, dass** es an die Profilform eines Ladungsträgers (100, 111) angepasst ist.

9. Trägerelement (10) nach einem der Ansprüche 7 oder 8, **dadurch gekennzeichnet, dass** es lösbar mit einem Ladungsträger (100, 111) verbindbar ist.

10. Trägerelement (10) nach einem der Ansprüche 7 bis 9, **dadurch gekennzeichnet, dass** es aus einem, insbesondere thermoplastischen Kunststoff, vorzugsweise im Spritzgussverfahren, gefertigt ist.

11. Trägerelement (10) nach einem der Ansprüche 7 bis 10, **dadurch gekennzeichnet, dass** es einen, vorzugsweise auswechselbaren Signalknopf (15) aufweist.

12. Trägerelement (10) nach einem der Ansprüche 7 bis 10, **dadurch gekennzeichnet, dass** es als geripptes Profil ausgebildet ist.
